# EUROPEAN PATENT APPLICATION

(11) **EP 4 769 751 A1**
(43) Date of publication of application: **01.07.2026**
(21) Application number: 24949449.3
(22) Date of filing: 21.11.2024
(51) Int. Cl.: H01M 50/342, H01M 50/35, H01M 50/30

(54) **BATTERY PACK**

(30) Priority: 29.07.2024 CN 202421826027 U
(71) Applicant: Eve Energy Co., Ltd, Huizhou, Guangdong 516006 (CN)
(72) Inventor: TIAN, Yuansong, Huizhou Guangdong 516000 (CN); LIU, Nian, Huizhou Guangdong 516000 (CN)
(74) Representative: Michalski Hüttermann & Partner mbB
(86) International application number: PCT/CN2024/133516
(87) International publication number: WO 2026/025730

(57) **Abstract**

The present disclosure provides a battery pack. The battery pack includes a box body, a battery module, and a guide structure. The box body has a weakened structure. The battery module is arranged in the box body and includes multiple battery cells arranged in parallel, where each of the battery cells is provided with an explosion-proof valve. The guide structure is in communication between the explosion-proof valve and the weakened structure, and is configured to guide gas to the weakened structure when thermal runaway occurs in the battery cell, so that the weakened structure is ruptured and the gas is discharged from the box body when a pressure of the gas exceeds a pressure that the weakened structure can withstand.

## Description

### CROSS-REFERENCE TO RELATED APPLICATION(S)

This application claims priority to Chinese Patent Application No. 202421826027.1, filed July 29, 2024, the entire disclosure of which is incorporated herein by reference.

### TECHNICAL FIELD

This disclosure relates to the field of battery technology, and in particular, to a battery pack.

### BACKGROUND

As a power source of new energy vehicles, a power battery is one of the core components of new energy vehicles. Therefore, safety of the power battery during use becomes a focus of attention. To ensure the safety of the battery pack during use, an explosion-proof valve assembly is usually arranged on an upper cover, so that gas can rupture the explosion-proof valve assembly to realize pressure relief when thermal runaway occurs in the battery.

### TECHNICAL PROBLEM

The assembly cost of the battery pack is increased by the arrangement of the explosion-proof valve assembly on the upper cover.

### TECHNICAL SOLUTION

The present disclosure provides a battery pack. The battery pack includes a box body, a battery module, and a guide structure. The box body has a weakened structure. The battery module is arranged in the box body and includes multiple battery cells arranged in parallel, where each of the battery cells is provided with an explosion-proof valve. The guide structure is in communication between the explosion-proof valve and the weakened structure, and is configured to guide gas to the weakened structure when thermal runaway occurs in the battery cell, so that the weakened structure is ruptured and the gas is discharged from the box body when a pressure of the gas exceeds a pressure that the weakened structure can withstand.

### ADVANTAGEOUS EFFECTS

By defining the weakened structure on the upper cover and arranging the guide structure in the box body, gas ejected from the explosion-proof valve can be guided to the weakened structure through the guide structure when thermal runaway occurs in the battery cell. Thus, the high-temperature gas can rupture the weakened structure and be discharged through the upper cover when the pressure of the high-temperature gas exceeds the pressure that the weakened structure can withstand, thus ensuring the safety of the battery during use. Additionally, since no hole is drilled and no explosion-proof valve assembly is installed on the upper cover, and pressure relief is realized by directly defining the weakened structure on the upper cover, the assembly cost of the battery pack can be reduced.

### BRIEF DESCRIPTION OF THE DRAWINGS

FIG. 1 is a three-dimensional schematic diagram of a battery pack in an embodiment of the present disclosure.
FIG. 2 is an exploded schematic diagram of the battery pack in FIG. 1.
FIG. 3 is another exploded schematic diagram of the battery pack in FIG. 1.
FIG. 4 is a partial cross-sectional schematic diagram of the battery pack in FIG. 1.
FIG. 5 is a structural schematic diagram of a mounting box, a battery module, and a cells contact system (CCS) bracket in FIG. 2.
FIG. 6 is a cross-sectional schematic diagram of an upper cover in FIG. 2.
FIG. 7 is a structural schematic diagram of a mounting box and a battery module in FIG. 2.

In the figures: 100-battery pack, 10-box body, 11-mounting box, 12-upper cover, 121-weakened structure, 122-blocking block, 20-battery module, 21-battery cell, 211-explosion-proof valve, 30-CCS bracket, 31-discharge hole, 40-guide structure, 41-guide portion, 411-guide cylinder, 412-guide channel, 42-abutting portion, 421-lead-out channel.

### DETAILED DESCRIPTION

The present disclosure will be illustrated in further detail below with reference to the accompanying drawings.

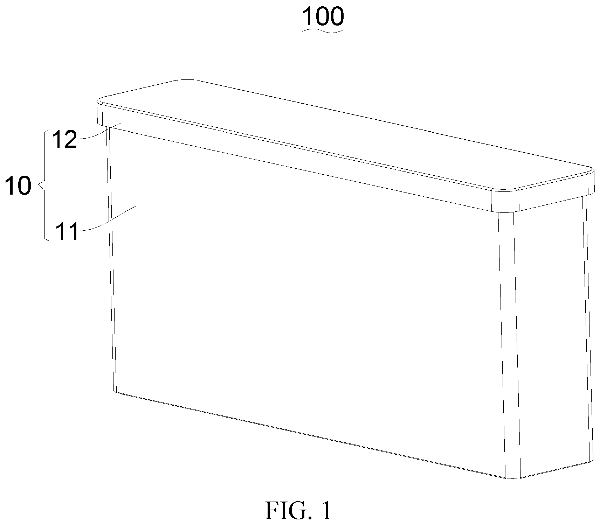

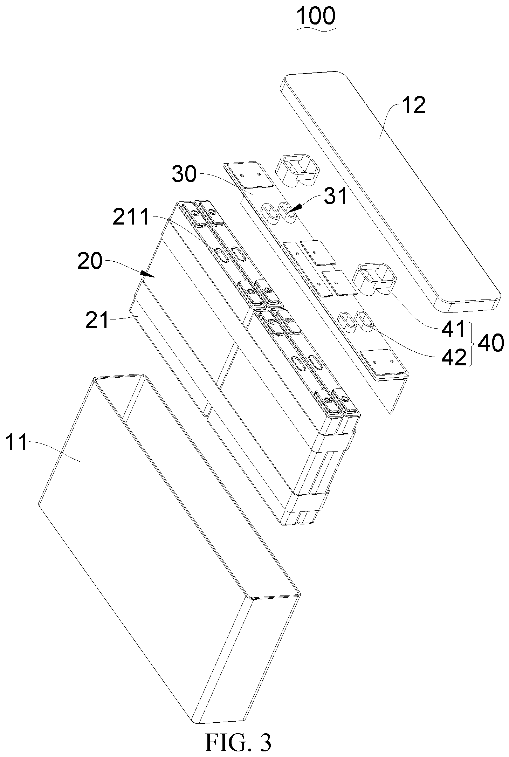

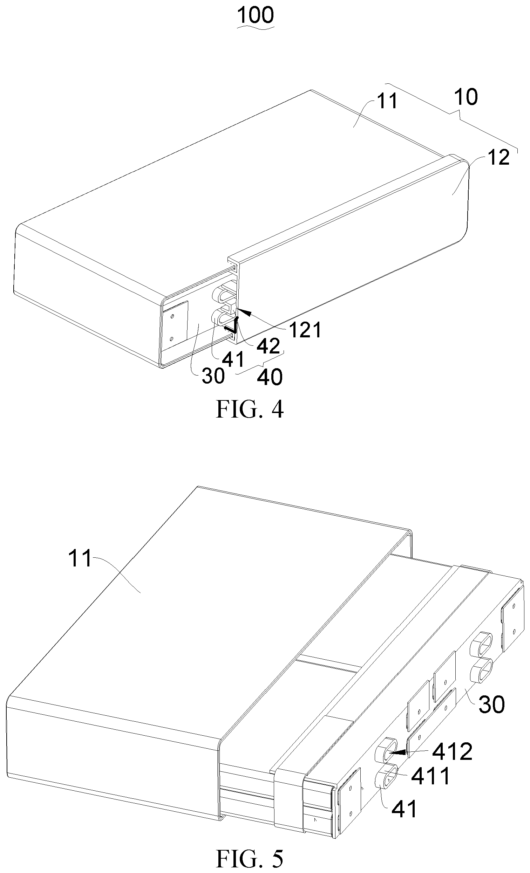

With reference to FIG. 1 to FIG. 7, a battery pack 100 is provided in an embodiment of the present disclosure, which includes a box body 10, a battery module 20, a cells contact system (CCS) bracket 30, and a guide structure 40.

The box body 10 has a weakened structure 121. The battery module 20 is arranged in the box body 10 and includes multiple battery cells 21 arranged in parallel, where each battery cell 21 is provided with an explosion-proof valve 211. The guide structure 40 is in communication between the explosion-proof valve 211 and the weakened structure 121, and is configured to guide gas to the weakened structure 121 when thermal runaway occurs in the battery cell 21, so that the weakened structure 121 is ruptured and the gas is discharged from the box body 10 when a pressure of the gas exceeds a pressure that the weakened structure 121 can withstand.

The box body 10 in the embodiment includes a mounting box 11 and an upper cover 12, and the upper cover 12 has the weakened structure 121. Since the upper cover 121 corresponds to a side of the battery module 20 where the explosion-proof valve 211 is provided, by defining the weakened structure 121 on the upper cover 12, the guide structure 40 can be directly abutted between the explosion-proof valve 211 and the weakened structure 121, thus realizing the communication between the explosion-proof valve 211 and the weakened structure 121.

For the above battery pack 100, by defining the weakened structure 121 on the upper cover 12 and arranging the guide structure 40 in the box body 10, gas ejected from the explosion-proof valve 211 can be guided to the weakened structure 121 through the guide structure 40 when thermal runaway occurs in the battery cell 21. Thus, the high-temperature gas can rupture the weakened structure 121 and be discharged through the upper cover 12 when the pressure of the high-temperature gas exceeds the pressure that the weakened structure 121 can withstand, thus ensuring the safety of the battery during use. Additionally, since no hole is drilled and no explosion-proof valve 211 is installed on the upper cover 12, and pressure relief is realized by directly defining the weakened structure on the upper cover, the assembly cost of the battery pack can be reduced.

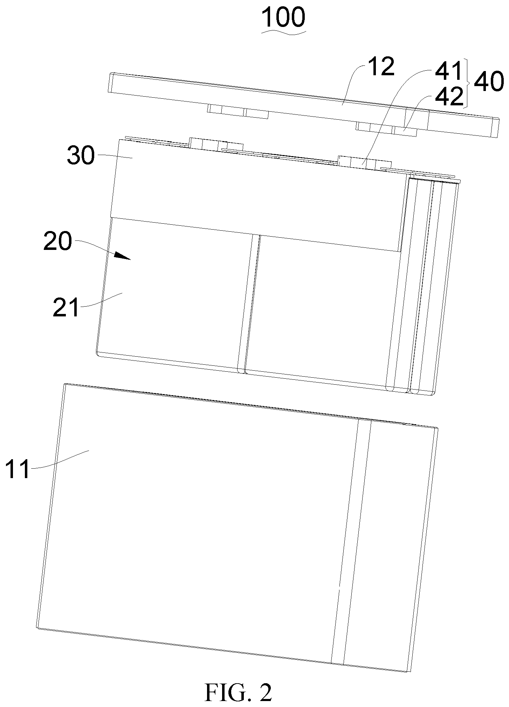

In some implementations, for example, with reference to FIG. 2 to FIG. 5, the battery pack in the embodiment further includes the CCS bracket 30. The CCS bracket 30 is disposed on a side of the battery module 20 facing the upper cover 12, and an area of the CCS bracket 30 aligned with the explosion-proof valve 211 defines a discharge hole 31. The guide structure 40 is in communication between the discharge hole 31 and the weakened structure 121, so that in a case where the CCS bracket 30 is disposed on the side of the battery module where the explosion-proof valve 211 is disposed, the guide structure 40 is in communication between the CCS bracket 30 and the weakened structure 121. In another embodiment, the CCS bracket 30 may also be disposed on another side surface of the battery module 20.

In some implementations, with reference to FIG. 2 to FIG. 7, the guide structure 40 includes a guide portion 41 and a abutting portion 42 that are detachably connected. The guide portion 41 is connected to the CCS bracket 30, and the abutting portion 42 is connected to the upper cover 12. Thus, by providing the guide structure 40 in a two-part configuration, the guide structure 40 can be connected to the CCS bracket 30 and the upper cover 12 respectively. Meanwhile, the guide portion 41 and the abutting portion 42 are detachably connected, thus ensuring the airtightness when the gas is guided to the upper cover 12 after connection.

In some implementations, the guide portion 41 in the embodiment includes multiple independently arranged guide cylinders 411, where one guide cylinder 411 is arranged aligned with one explosion-proof valve 211. The abutting portion 42 defines multiple lead-out channels 421, where one lead-out channel 421 is in communication with one guide channel 412 of the guide cylinder 411. That is, the guide portion 41 includes multiple guide cylinders 411, the abutting portion 42 is an integral structure with multiple lead-out channels 421 inside, and one lead-out channel 421 is in communication with one guide cylinder 411. Thus, gas guided out by the guide cylinder 411 can enter the lead-out channel 421 of the abutting portion 42, and then rupture the weakened structure 121 and discharged from the upper cover 12. In another embodiment, the guide structure 40 may also be configured as an integral structure with multiple channels inside, where one channel corresponds to one explosion-proof valve 211, and this configuration can also discharge the gas.

In some implementations, in a case where the guide portion 41 and the abutting portion 42 are detachably connected, the abutting portion 42 is in plug-in connection with the guide portion 41. That is, the abutting portion 42 and the guide portion 41 have an overlapping portion, and a part of the abutting portion 42 is received within the guide portion 41, or a part of the guide portion 41 is received within a plug-in portion, thus ensuring the airtightness during gas flow.

In some implementations, when the abutting portion 42 and the guide portion 41 of the embodiment are in a plug-in fit, the abutting portion 42 is sleeved over a part of the guide structure 40. Since the upper cover 12 has higher structural strength than the CCS bracket 30, the abutting portion 42 formed on the upper cover 12 can have higher structural strength and greater thickness than the guide portion 41. Thus, the configuration where the abutting portion 42 is sleeved over the guide portion 41 facilitates the connection between the abutting portion 42 and the CCS bracket 30, and ensures the structural strength of the abutting portion 42 and the guide portion 41 after plug-in connection.

In some implementations, the guide portion 41 of the embodiment is integrally formed with the CCS bracket 30, and the abutting portion 42 is integrally formed with the upper cover 12, which facilitates the forming of the CCS bracket 30 and the upper cover 12. That is, the guide portion 41 can be formed at the same time when the CCS bracket 30 is formed, and the abutting portion 42 can be formed at the same time when the upper cover 12 is formed, which facilitates the rapid assembly of the entire battery pack 100.

In some implementations, to ensure the structural strength of the upper cover 12 after the weakened structure 121 is defined, an opening area of a side of the abutting portion 42 facing the weakened structure 121 is larger than an area defined by the weakened structure 121. Such a configuration can not only discharge the gas through the position of the weakened structure 121, but also ensure the structural strength of the upper cover 12 after the weakened structure 121 is defined.

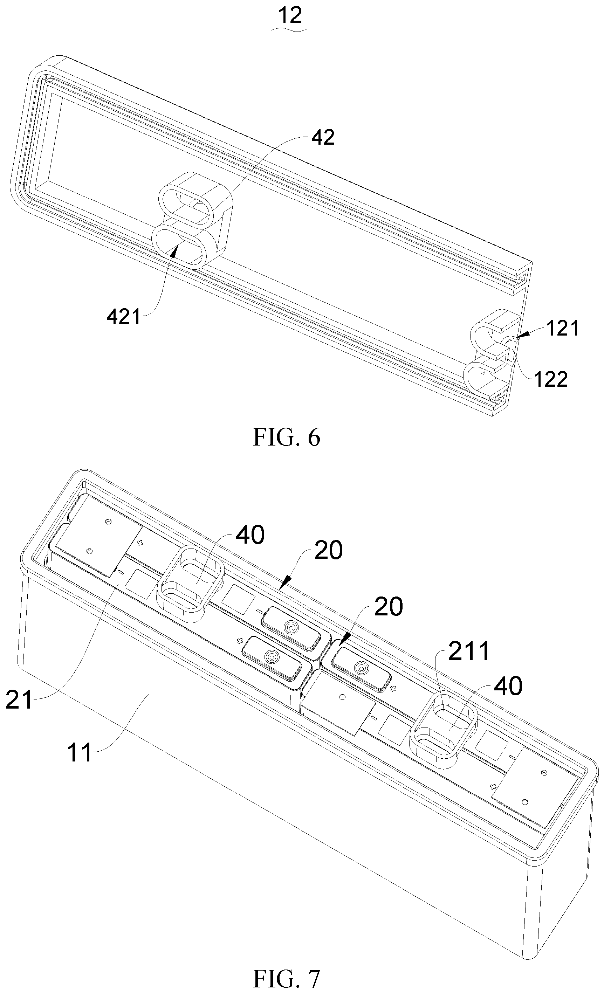

With reference to FIG. 6, the weakened structure 121 in the embodiment is a notch defined on the upper cover 12. That is, the thickness of the upper cover 12 at the notch is relatively thinner. Thus, the notch can be ruptured relative to the upper cover 12 under the pressure of the gas, so as to form an discharge port on the upper cover 12 for discharging the gas.

In some implementations, the notch in the embodiment is circular, that is, when the notch is ruptured, a blocking block 122 is forced out from the upper cover 12, thereby forming the discharge port at the position of the blocking block 122 for discharging the gas.

In some implementations, the thickness of the upper cover 12 ranges from 2.0 mm to 2.5 mm, and the thickness of the upper cover 12 at the notch ranges from 0.3 mm to 0.5 mm. Such a thickness configuration for the notch prevents the weakened structure 121 from being easily ruptured relative to the upper cover 12 by external forces, and also ensures that the weakened structure 121 can be rapidly ruptured relative to the upper cover 12 under the action of the gas, thereby ensuring the safety of the battery pack 100 during use.

In some implementations, the thickness of the upper cover 12 at the notch may be set to such as 0.3 mm, 0.4 mm, or 0.5 mm, which is not limited herein.

With reference to FIG. 7, in an embodiment of the present disclosure, in a case where the battery pack 100 includes multiple battery modules 20, the battery pack 100 includes multiple guide structures 40, and the upper cover 12 has multiple weakened structures 121. The multiple battery modules 20 are arranged in parallel and electrically connected in sequence, and one explosion-proof valve 211 of the battery module 20, one guide structure 40, and one weakened structure 121 are arranged in one-to-one correspondence. Thus, in the case where multiple battery modules 20 are arranged in the battery pack 100, gas from the explosion-proof valve 211 of one battery module 20 can be directly guided to the corresponding guide structure 20, and the gas in the corresponding guide structure 40 can have sufficient gas pressure to rapidly rupture the weakened structure 121, so as to rapidly discharge the gas through the weakened structure 121, thereby ensuring the safety of the battery pack 100 during use. In another embodiment, to facilitate the defining of the weakened structure 121 on the upper cover 12, multiple guide structures 20 may be arranged corresponding to one weakened structure 121, which can also discharge the gas.

## Claims

1. A battery pack (100), comprising:
a box body (10) having a weakened structure (121);
a battery module (20), arranged in the box body (10), comprising a plurality of battery cells (21) arranged in parallel, wherein each of the battery cells (21) is provided with an explosion-proof valve (211); and
a guide structure (40), in communication between the explosion-proof valve (211) and the weakened structure (121), configured to guide gas to the weakened structure (121) when thermal runaway occurs in the battery cell (21), so that the weakened structure (121) is ruptured and the gas is discharged from the box body (10) when a pressure of the gas exceeds a pressure that the weakened structure (121) can withstand.

2. The battery pack (100) of claim 1, wherein the battery pack (100) further comprises a cells contact system (CCS) bracket (30) defining a discharge hole (31) aligned with the explosion-proof valve, and the guide structure (40) is in communication between the discharge hole (31) and the weakened structure (121).

3. The battery pack (100) of claim 2, wherein the guide structure (40) comprises a guide portion (41) and a abutting portion (42) that are detachably connected, the guide portion (41) is connected to the CCS bracket (30), and the abutting portion (42) is connected to the box body (10).

4. The battery pack (100) of claim 3, wherein the guide portion (41) comprises a plurality of independently arranged guide cylinders (411), each of the guide cylinders (411) is arranged to align with one explosion-proof valve (211), the abutting portion (42) defines a plurality of lead-out channels (421), and each of the lead-out channels (421) is in communication with a guide channel (412) of one guide cylinder (411).

5. The battery pack (100) of claim 3, wherein the abutting portion (42) is in plug-in connection with the guide portion (41).

6. The battery pack (100) of claim 5, wherein the abutting portion (42) is sleeved over a part of the guide portion (40).

7. The battery pack (100) of any one of claims 2 to 6, wherein a guide portion (41) is integrally formed with the CCS bracket (30).

8. The battery pack (100) of any one of claims 2 to 6, wherein a abutting portion (42) is integrally formed with the box body (10).

9. The battery pack (100) of any one of claims 3 to 6, wherein an opening area of a side of the abutting portion (42) facing the weakened structure (121) is larger than an area defined by the weakened structure (121).

10. The battery pack (100) of any one of claims 1 to 6, wherein the battery pack (100) comprises a plurality of battery modules (20) and a plurality of guide structures (40), the box body (10) has a plurality of weakened structures (121), the plurality of battery modules (20) are arranged in parallel and electrically connected in sequence, and one explosion-proof valve (21) of the battery module (20), one guide structure (40) and one weakened structure (121) are arranged in one-to-one correspondence.

11. The battery pack (100) of any one of claims 1 to 5, wherein the weakened structure (121) is a notch formed on the box body (10).

12. The battery pack (100) of claim 11, wherein the box body (10) comprises a mounting box (11) and an upper cover (12), and the upper cover (12) defines the weakened structure (121).

13. The battery pack (100) of claim 12, wherein a thickness of the upper cover (12) ranges from 2.0 mm to 2.5 mm, and a thickness of the upper cover (12) at the notch ranges from 0.3 mm to 0.5 mm.
